# EUROPEAN PATENT APPLICATION

(11) **EP 4 850 791 A1**
(43) Date of publication of application: **09.12.2026**
(21) Application number: 25180527.1
(22) Date of filing: 03.06.2025
(51) Int. Cl.: B01D 53/94, B01J 23/63, B01J 29/08, B01J 35/57, B01J 37/02, B01J 37/16, F01N 3/035

(54) **METHOD FOR THE MANUFACTURE OF A CATALYTIC GASOLINE PARTICULATE FILTER**

(71) Applicant: Johnson Matthey Public Limited Company, London EC2V 7AD (GB)
(72) Inventor: BENET RAJKUMAR, Brenda, Royston, SG8 5HE (GB); MARVELL, David, Royston, SG8 5HE (GB); TURNER, John, Royston, SG8 5HE (GB)
(74) Representative: Johnson Matthey Public Limited Company

(57) **Abstract**

Provided is a method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a first polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) a second polyacrylate, (b) a second platinum group metal selected from the group consisting of Pt, Pd, Rh and mixtures thereof, (c) a second oxygen storage capacity (OSC) material, and (d) a second inorganic oxide support;
(iv) providing a third washcoat slurry comprising: (a) an organic pore former, (b) optionally a third platinum group metal selected from the group consisting of Pt, Pd, Rh and mixtures thereof, (c) optionally a third oxygen storage capacity (OSC) material, and (d) optionally a third inorganic oxide support;
(v) coating the wall-flow filter substrate with the first washcoat slurry from the first face to form a first coating disposed within the porous walls;
(vi) coating the wall-flow filter substrate with the second washcoat slurry from the second face to form a second coating disposed within the porous walls;
(vii) coating the wall-flow filter substrate with the third washcoat slurry from the first face to form a third coating disposed on the first plurality of inner surfaces; and
(viii) calcining the first, second and third coatings to form the catalytic GPF.

## Description

The present invention relates to a method for the manufacture of a catalytic gasoline particulate filter (GPF) for the treatment of exhaust gas from a gasoline engine, a catalytic GPF obtained or obtainable by such a method, an emission treatment system and a method for treating an exhaust gas from a gasoline engine.

GPFs are an emission after-treatment technology developed to control particulate emissions from gasoline direct injection (GDI) engines.

Most early GPF applications included an uncoated GPF positioned downstream of a three-way catalyst (TWC). As the technology matured, GPFs have been coated with a three-way catalyst. See, for example, US2009/0193796A1, US2010/0239478A1, US2019/0009254A1, US2019/0168162A1, and US2020/0353410A1. However, the combination of the TWC washcoat on a filter body may introduce additional issues such as excessive backpressure, and there are requirements for minimum CO, NOx and HC conversion properties. In addition, there are cost considerations with a need to provide the best possible balance of performance to cost.

There is a continued need for improved technologies to effectively convert CO, NOx and HC and to reduce particulate matter in exhaust gas from a gasoline engine, without compromising on backpressure.

US2009/0044521A1 discloses an exhaust gas catalyst comprising a support and a plurality of layers formed thereon, wherein at least one of the plurality of layers contains voids therewithin and at least one of the plurality of layers comprises catalyst components. US2017/0304810A1 discloses a method of coating a substrate with a foam. The method comprises: (a) introducing a foam into a substrate comprising a plurality of channels through open ends of the channels at a first end of the substrate; and (b) optionally applying (i) a vacuum to open ends of the channels at a second end of the substrate and/or (ii) a pressure to the open ends of the channels at the first end of the substrate; wherein the foam comprises a particulate material, and wherein the foam is particle stabilized.

US2022/0280930A1 discloses a method for producing a porous coating on carrier substrates by providing a coating suspension which has at least one inorganic coating material and at least one polymeric organic pore former, characterized in that the polymeric pore former is composed of water-insoluble swollen particles having a water content of 40 wt% to 99.5 wt%, coating the carrier substrate with the coating suspension, and drying and calcining the coated carrier substrate.

US2022/0410129A1 discloses a catalyst washcoat composition comprising a slurry comprising at least one platinum group metal and/or at least one non-platinum group metal supported on at least one support; and at least one pore forming agent having a particle size ranging from 100 nm to 5.0 µm, wherein the pore forming agent is selected from carbon nano-tubes, carbon nano-fibres, activated carbon, resins, cellulose powder, and polymer spheres. US2022/0410129A1 also teaches a catalyst article for capturing particulate matter comprising a calcined porous washcoat deposited on a substrate, wherein the calcined porous washcoat comprising at least one platinum group metal and/or at least one non-platinum group metal supported on at least one support, wherein the calcined porous washcoat comprises pores of which 50% to 100% have a pore size ranging from 100 nm to 5.0 µm, wherein the size of the particulate matter ranges from 1.0 nm to 100 µm.

The present invention seeks to tackle at least some of the problems associated with the prior art or at least to provide a commercially acceptable alternative solution thereto. In particular, it is an object of the present invention to provide a catalytic GPF having improved (three-way) catalytic activity and/or improved filtration efficiency and/or reduced backpressure compared with existing catalytic GPFs.

According to a first aspect, the present invention provides a method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a first polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) a second polyacrylate, (b) a second platinum group metal selected from the group consisting of Pt, Pd, Rh and mixtures thereof, (c) a second oxygen storage capacity (OSC) material, and (d) a second inorganic oxide support;
(iv) providing a third washcoat slurry comprising: (a) an organic pore former, (b) optionally a third platinum group metal selected from the group consisting of Pt, Pd, Rh and mixtures thereof, (c) optionally a third oxygen storage capacity (OSC) material, and (d) optionally a third inorganic oxide support;
(v) coating the wall-flow filter substrate with the first washcoat slurry from the first face to form a first coating disposed within the porous walls;
(vi) coating the wall-flow filter substrate with the second washcoat slurry from the second face to form a second coating disposed within the porous walls;
(vii) coating the wall-flow filter substrate with the third washcoat slurry from the first face to form a third coating disposed on the first plurality of inner surfaces; and
(viii) calcining the first, second and third coatings to form the catalytic GPF.

The present inventors have found that catalytic GPFs prepared in accordance with the invention have good three-way catalytic activity and filtration efficiency, without causing an unacceptable increase in backpressure. That is, a good balance of properties is provided by the catalytic GPFs of the present invention.

The present invention will now be described further. Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The first step of the method comprises providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces. Such wall-flow filters are well known in the art. The first and second pluralities of inner surfaces define the porous walls. In use, the first face may be the "inlet" face and the second face may be the "outlet" face with respect to the flow of exhaust gas. Alternatively, the second face may be the "inlet" face and the first face may be the "outlet" face. It is preferred that the first face is the "inlet" face and the second face is the "outlet" face.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention (i.e. before any coatings are applied) typically has a mean pore size of from 8 to 45 µm, for example 8 to 25 µm, or 10 to 20 µm. Pore size is well known in the art and appropriate measurement techniques are known to a person skilled in the art. The wall-flow filter substrate preferably a porosity of 40 to 75%, such as 45 to 70%. The mean pore size may be determined using mercury porosimetry and/or x-ray tomography according to conventional methods.

The wall-flow filter substrate typically comprises a cell density of from 60 to 400 cells per square inch (cpsi). It is preferred that the wall-flow filter substrate comprises a cell density of from 100 to 350 cpsi, more preferably from 200 to 300 cpsi. The wall-flow filter substrate monolith may have a wall thickness (e.g. mean internal wall thickness) of from 0.20 to 0.50 mm, preferably from 0.25 to 0.35 mm (e.g. about 0.30 mm).

The second step of the method comprises providing a first washcoat slurry comprising: (a) a first polyacrylate, (b) a first platinum group metal selected from the group consisting of Pt, Pd, Rh and mixtures thereof, (c) a first oxygen storage capacity (OSC) material, and (d) a first inorganic oxide support.

The term "polyacrylate" refers any polymer containing polymerized acrylic acid and/or its deprotonated form, depending on the pH of the media in which it is present. The first polyacrylate can be a homopolymer or a copolymer. That is, in some embodiments, the first polyacrylate is a homopolymer of acrylic acid or acrylate (i.e., the deprotonated form of acrylic acid). In other embodiments, the first polyacrylate is a copolymer of acrylic acid or acrylate with one or more further monomer units. For instance, the first polyacrylate may be a copolymer of acrylic acid or acrylate with one or more monomer units selected from acrylamides, acrylonitrile, or other compounds containing a vinyl functional group. In some embodiments, the first polyacrylate has a weight average molecular weight (Mw) in its deprotonated form of from 800 to 4000, or from 1600 to 3200, or from 2500 to 3000 g/mol.

In an aqueous solution at neutral pH, the first polyacrylate is an anionic polymer, i.e., many of the carboxylic side chains of the polymer lose their protons and acquire a negative charge. Partially or wholly deprotonated polyacrylates are polyelectrolytes, with the ability to absorb and retain water.

The first washcoat slurry preferably comprises the first polyacrylate in an amount of from 2 to 15 wt%, or from 2 to 10 wt%, or from 3 to 6 wt% based on the total weight of the first washcoat slurry.

The present inventors have found that including a polyacrylate in the first washcoat slurry allows it to be more effectively localised within the porous walls of the substrate (i.e. to be disposed "in-wall") during the subsequent coating step, without a significant "on-wall" component (either on the surfaces of the channels to which it is applied, or on the surfaces of the other set of channels, where it may otherwise end up when the coating is "pulled through" the substrate through application of a vacuum). That is, greater washcoat location control is provided compared with a comparable washcoat that lacks the polyacrylate.

In some embodiments, the first platinum group metal (PGM) comprises Pd and Rh. In some embodiments, the first PGM comprises Pt and Rh. In some embodiments, the first PGM comprises Pt and Pd. The total PGM content of the first washcoat slurry may be from 0.005 to 10 wt%, or from 0.001 to 5 wt%, or from 0.05 to 3 wt%, based on the total weight of the first washcoat slurry.

The first PGM may be present in the first washcoat slurry as PGM ions. Alternatively, the first PGM may already be pre-fixed to the first OSC material and/or the first inorganic oxide support, i.e. therefore typically being present in the form of nanoparticles supported on the first OSC material and/or the first inorganic oxide support.

"Oxygen storage capacity" refers to the ability of materials used as oxygen storage capacity materials in catalysts to store oxygen under lean conditions and to release it under rich conditions. The first OSC material may be ceria, a mixed oxide comprising ceria, or a composite oxide comprising ceria. In some embodiments, the first OSC material is a mixed oxide of cerium and zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art. Preferably, the first OSC material is ceria or a mixed oxide comprising ceria, preferably a ceria-zirconia mixed oxide and/or a ceria-zirconia-alumina mixed oxide. Preferably, the first OSC material is a ceria-zirconia mixed oxide in which the weight ratio of ZrO₂ to CeO₂ is from 4:1 to 1:1, more preferably about 2:1.

The first OSC material can be doped with a dopant. The dopant can be selected from the group consisting of La, Sr, Si, Ba, Y, Pr, Nd, and mixtures thereof. For example, the dopant can be Nd and/or Pr. The dopant content in the first OSC material can be from 1 to 30 wt%, from 2 to 25 wt%, or from 3 to 20 wt%, based on the total weight of the first OSC material and dopant.

The first inorganic oxide support may act as a support for the first platinum group metal. In some embodiments, the first inorganic oxide support is an oxide of one or more elements from Group 2, 3, 4, 5, 13 and/or 14. The first inorganic oxide support is preferably a refractory oxide. Refractory oxides exhibit chemical and physical stability at high temperatures, such as the temperatures associated with gasoline engine exhaust. The first inorganic oxide support can be selected from the group consisting of alumina, silica, titania, and mixed oxides or composite oxides thereof. Preferably, the first inorganic oxide support is an alumina, more preferably a boehmite alumina.

In some embodiments, the first washcoat slurry further comprises barium. The barium may be present in the first washcoat slurry as barium ions.

The first washcoat slurry typically comprises a solvent. Water and organic solvents (methanol, ethanol, propanol, and the like) or their mixtures can be used. Preferably, the solvent comprises, more preferably is, water. In other words, the first washcoat slurry is preferably an aqueous slurry. The term "washcoat slurry" as used herein is a term of art and typically refers to a suspension, preferably an aqueous suspension, of the components of the washcoat slurry.

The first washcoat slurry preferably has a viscosity of less than 500 cP at 20 °C, more preferably less than 300 cP, still more preferably less than 200 cP. Such viscosities (which are generally lower than those targeted for the second washcoat slurry) may help to direct the first washcoat slurry "in-wall" during the subsequent coating step. The viscosity may be measured on a Brookfield TM RV DVII+ Extra Pro viscometer using a SC4-27 spindle at 50 rpm spindle speed.

Preferably, the first washcoat slurry has a solids content of from 10 to 50 wt%, or from 15 to 40 wt%, based on the total weight of the first washcoat slurry.

The step of providing a first washcoat slurry preferably comprises combining the first polyacrylate, the first PGM (or, if present as PGM ions, a source of the PGM ions), the first OSC material, the first inorganic oxide support, optionally a source of barium ions, and a solvent (e.g. water).

The source of PGM ions preferably comprises one or more PGM salts, such as PGM nitrate, PGM acetate and/or PGM carbonate.

In some embodiments, the polyacrylate source is an ammonium polyacrylate, as shown in the formula below.

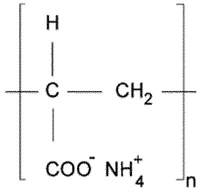

The weight average molecular weight (Mw) of the ammonium polyacrylate can be from 1000 to 5000, or from 2000 to 4000, or from 3200 to 3800 g/mol.

The polyacrylate source can be an aqueous solution of ammonium polyacrylate, preferably comprising from 10 to 50 wt% ammonium polyacrylate based on the total weight of the solution. The aqueous solution of ammonium polyacrylate may have a pH of from 7 to 10, or from 8 to 9.5.

Suitable polyacrylate sources include Dispex^{®} AA 4040 and Dispex^{®} CX 4240, which are aqueous solutions of an ammonium polyacrylate and are commercially available from BASF. Dispex^{®} AA 4140 is the sodium salt of the same polymer as Dispex^{®} AA 4040.

The source of barium ions preferably comprises one or more barium salts, such as barium acetate, barium hydroxide and/or barium chloride.

The third step of the method comprises providing a second washcoat slurry comprising: (a) a second polyacrylate, (b) a second platinum group metal (PGM) selected from the group consisting of Pt, Pd, Rh and mixtures thereof, (c) a second oxygen storage capacity (OSC) material, and (d) a second inorganic oxide support. Any features disclosed above in relation to the first washcoat slurry, its components and its preparation may also apply to the second washcoat slurry (e.g. with the label "first" switched for "second"). Preferably, the second washcoat slurry has a composition that differs from that of the first washcoat composition in at least one respect.

For instance, the PGM component of the second washcoat slurry may differ from that of the first washcoat slurry. In some embodiments, both the first PGM and the second PGM comprise Pd and Rh, but the first PGM comprises at least 70 wt%, preferably at least 90 wt% Rh by weight of the first PGM, whereas the second PGM comprises at least 70 wt%, preferably at least 90 wt% Pd by weight of the second PGM. Segregating the PGM in this manner has been found to provide improvements in catalytic performance.

The fourth step of the method comprises providing a third washcoat slurry comprising: (a) an organic pore former, (b) optionally a third platinum group metal selected from the group consisting of Pt, Pd, Rh and mixtures thereof, (c) optionally a third oxygen storage capacity (OSC) material, and (d) optionally a third inorganic oxide support. In some embodiments, none of (b) to (d) are present. In other embodiments one or more of (b) to (d), preferably at least (d), are present.

Suitable organic pore formers are known in the art. The organic pore former may be selected from the group consisting of cellulose, polyethylene, starch, graphite, polypropylene, polyaramide, polytetrafluoroethylene, polystyrene, polymethyl methacrylate (PMMA), and mixtures thereof. The source of the cellulose may, for instance, be cellulose powder or cellulose fibers. Commercially available organic pore formers include Arbocel^{®} (such as Arbocel^{®} UFC 100), Vivapur^{®}, Mipelon^{™} PM-200, Propyltex^{®}, Orgasol^{®}, and Remyrise^{®}.

The organic pore former may have a Dv50 in a range of from 1 to 30 µm, preferably from 2 to 25 µm, more preferably from 3 to 20 µm, even more preferably from 4 to 18 µm, and most preferably from 6 to 12 µm.

In some embodiments, the organic pore former is cellulose obtained from a cellulose powder. Preferably, the cellulose powder has a Dv50 in the range of 6 to 12 µm.

In some embodiments, the third washcoat slurry comprises from 10 to 100 wt% of the organic pore former based on the total weight of the third coating after calcination, preferably from 20 to 60 wt%. These ranges represent a balance, introducing significant porosity into the coating layer (maximising the gas-contacting surface area) without significantly reducing adhesion of the coating to the substrate or the rate at which the coating heats up when the GPF is in use.

In some embodiments, the third platinum group metal (PGM) comprises Pd and Rh. In some embodiments, the third PGM comprises Pt and Rh. In some embodiments, the third PGM comprises Pt and Pd. The total PGM content of the second washcoat slurry may be from 0.005 to 10 wt%, from 0.001 to 5 wt%, or from 0.05 to 3 wt%, based on the total weight of the third washcoat slurry. The third PGM, where present, may be the same as or different from the first PGM and/or the second PGM.

The third PGM may be present in the third washcoat slurry as PGM ions. Alternatively, the third PGM may already be pre-fixed to the third OSC material and/or the third inorganic oxide support, i.e. therefore typically being present in the form of nanoparticles supported on the third OSC material and/or the third inorganic oxide support.

The third OSC material may be ceria, a mixed oxide comprising ceria, or a composite oxide comprising ceria. In some embodiments, the third OSC material is a mixed oxide of cerium and zirconium; a mixed oxide of cerium, zirconium, and aluminium; a mixed oxide of cerium, zirconium, and neodymium; or a mixed oxide of cerium, zirconium and praseodymium. Preferably, the third OSC material is ceria or a mixed oxide comprising ceria, preferably a ceria-zirconia mixed oxide and/or a ceria-zirconia-alumina mixed oxide. Preferably, the third OSC material is a ceria-zirconia mixed oxide in which the weight ratio of ZrO₂ to CeO₂ is from 4:1 to 1:1, more preferably about 2:1.

The third OSC material can be doped with a dopant. The dopant can be selected from the group consisting of La, Sr, Si, Ba, Y, Pr, Nd, and mixtures thereof. For example, the dopant can be Nd and/or Pr. The dopant content in the second OSC material can be from 1 to 30 wt%, from 2 to 25 wt%, or from 3 to 20 wt%, based on the total weight of the third OSC material and dopant.

Preferably, the third OSC material has a volume-weighted mean particle diameter of from 5 to 30 µm, more preferably from 8 to 20 µm, and most preferably from 10 to 16 µm. The particle sizes may be determined as described above.

The third oxygen storage material, where present, may be the same as or different from the first oxygen storage material and/or the second oxygen storage material.

In some embodiments, the third inorganic oxide support is an oxide of one or more elements from Group 2, 3, 4, 5, 13 and/or 14. The third inorganic oxide support is preferably a refractory oxide. The third inorganic oxide support can be selected from the group consisting of alumina, silica, titania, and mixed oxides or composite oxides thereof. Preferably, the third inorganic oxide support is an alumina.

The third inorganic oxide support can be doped with a dopant. The dopant can be selected from the group consisting of La, Sr, Si, Ba, Y, Pr, Nd, Ce, and mixtures thereof. For example, the dopant can be La. The dopant content in the third inorganic oxide support can be from 1 to 30 wt%, from 2 to 25 wt%, or from 3 to 20 wt%, based on the total weight of the third inorganic oxide support and dopant.

The third inorganic oxide support preferably has a volume-weighted mean particle diameter of from 0.1 to 20 µm, more preferably from 5 to 15 µm, and most preferably from 8 to 12 µm.

The third inorganic oxide support, where present, may be the same as or different from the first inorganic oxide support and/or the second inorganic oxide support.

As an alternative to the third inorganic oxide support, the third washcoat slurry may comprise an alumina-based binder, such as a boehmite binder.

Preferably, the third washcoat slurry further comprises a zeolite. The zeolite can be a silicacontaining zeolite such as a siliceous zeolite. The zeolite can also be an aluminosilicate zeolite, a metal-substituted aluminosilicate zeolite, an aluminophosphate (AIPO) zeolite, a metal-substituted (MeAlPO) zeolite, a silico- aluminophosphate (SAPO), or a metal-substituted silico-aluminophosphate (MeAPSO). It is preferred that the zeolite is an aluminosilicate or silico- aluminophosphate (SAPO) zeolite. More preferably, the zeolite is an aluminosilicate.

Preferably, the zeolite has a framework type selected from the group of consisting of ACO, AEI, AEN, AFN, AFT, AFX, ANA, APC, APD, AST, ASV, ATT, BCT, BEA, BEC, BOF, BOG, BRE, CAN, CDO, CFI, CGS, CHA, CHI, CON, DAC, DDR, DFT, EAB, EDI, EPI, ERI, FER, GIS, GOD, IHW, ITE, ITW, LEV, KFI, MER, MFI, MON, NSI, OWE, PAU, PHI, RHO, RTH, SAT, SAV, SIV, THO, TSC, UEI, UFI, VNI, YUG, ZON. Each of the aforementioned threeletter codes represents a framework type in accordance with the "IUPAC Commission on zeolite Nomenclature" and/or the structure Commission of the international Zeolite Association. More preferably, the zeolite has a framework type selected from AEI, BEA, CHA, FER, FAU, MFA, still more preferably selected from AEI, CHA or FAU. Most preferably, the zeolite has the FAU framework type. A suitable example of such a zeolite is zeolite Y. The inventors have found that porous on-wall coatings, achieved by means of an organic pore former, are subject to cracking as the pore former is burnt off during calcination. This can result in particulate bypass, reducing the filtration efficiency of the coating. It has surprisingly been found that including a zeolite in the porous on-wall coating serves to improve the uniformity of the on-wall coating and reduce crack formation. This, in turn, may result in improved filtration efficiency. Moreover, it has been found that including the zeolite may improve the catalytic activity (e.g. reduce the light-off temperature (T50)) of the catalytic GPF with respect to NOx, CO and/or HC conversion.

In general, the zeolite may have a silica-to-alumina ratio (SAR) of from 2 to 500, preferably from 4 to 250, and more preferably from 8 to 150. In some embodiments, the zeolite has the FER or CHA or AEI framework type with a SAR of from 8 to 40, or from 10 to 30. In other embodiments, the zeolite has the FAU framework type and a SAR of 50 to 150, or from 80 to 120.

The zeolite may be metallised or non-metallised, preferably non-metallised. By "metallised" it is meant that one or more metals have been added to the zeolite structure, for instance by ion-exchange, impregnation or isomorphous substitution. That is, the zeolite may be promoted with one or more metals. The zeolite may be promoted with a transition metal, such as Fe, Cu, Co, Mn, Ni, Zn, Ce, Mo, Ag or a combination thereof, preferably Fe and/or Cu. The transition metal may present in an amount of from 0.01 to 20 wt%, preferably from 0.1 to 15 wt, more preferably from 0.5 to 10 wt% and most preferably from 1 to 5 wt% based on the weight of the zeolite and transition metal. Preferably, however, the zeolite is not promoted with a transition metal.

Preferably, the third washcoat slurry has a solids content of from 2 to 30 wt%, or from 8 to 20 wt%, based on the total weight of the third washcoat slurry.

It is to be understood that the third washcoat slurry has a different chemical composition from those of the first and second washcoat slurries (i.e. the components that make up the slurries and/or the respective amounts of the components in the slurries are preferably different). Preferably, the third washcoat slurry does not comprise a polyacrylate. Preferably, the first washcoat slurry and the second washcoat slurry do not comprise an organic pore former or a zeolite.

The third washcoat slurry preferably has a viscosity of at least 200 cP at 20 °C, more preferably at least 500 cP, still more preferably at least 800 cP. Such viscosities (which are generally greater than those targeted for the first and second washcoat slurries) may help to maintain the third washcoat slurry "on-wall" during the subsequent coating step. The viscosity may be measured as set out above.

The step of providing a third washcoat slurry preferably comprises combining an organic pore former, a solvent (e.g. water), optionally a third PGM (or, if present as PGM ions, a source of the PGM ions), optionally a third OSC material, optionally a third inorganic oxide support, and optionally a zeolite.

The fifth step of the method comprises coating the wall-flow filter substrate with the first washcoat slurry from the first face to form a first coating disposed within the porous walls, and the sixth step of the method comprises coating the wall-flow filter substrate with the second washcoat slurry from the second face to form a second coating disposed within the porous walls. That is, the first and coatings are disposed "in-wall". Suitable techniques for coating a wall-flow filter substrate with a washcoat slurry to form a coated substrate are known in the art. Suitable coating procedures are described in WO1999047260 A1 and in GB2524662 A, the contents of which are incorporated herein by reference in their entirety. It may happen that a small amount of the first and/or second washcoat slurries may be present on the first plurality of inner surfaces and/or the second plurality of inner surfaces following the coating step, but this should be avoided as much as possible. Preferably, at least 80 wt% of the first and/or second coating is within the porous walls, more preferably at least 90 wt%, still more preferably at least 95 wt%. The presence of polyacrylate in the first and washcoat slurries helps to drive the first and coatings in-wall without them additionally coating the first or second pluralities of inner surfaces to any significant degree. Further adjustments to the washcoat formulation to help achieve an in-wall coating are known to those skilled in the art, for instance by employing a relatively low viscosity slurry with finer material (especially the supported PGMs) to allow the washcoat to more readily infiltrate the porous substrate.

Preferably, the first coating extends from the first face for at least 50% of a length of the first plurality of channels, more preferably from 55 to 95%, still more preferably from 60 to 90%.

Preferably, the second coating extends from the second face for at least 50% of a length of the second plurality of channels, more preferably from 55 to 95%, still more preferably from 60 to 90%.

Preferably, the first coating abuts or overlaps with the second coating in the longitudinal direction. Preferably, the first and second coatings overlap by less than 20% of a length of the first plurality of channels, more preferably from 5 to 15%.

The seventh step of the method comprises coating the wall-flow filter substrate with the third washcoat slurry from the first face to form a third coating disposed on the first plurality of inner surfaces. That is, the third coating is disposed "on-wall". By "disposed on" it is meant that the third coating is directly disposed on the substrate, i.e. with no intervening material, and/or indirectly disposed on the substrate, i.e. with intervening material. Preferably, however, the third coating is directly disposed on the first plurality of inner surfaces. It may happen that a small amount of the third washcoat slurry may penetrate into the surface pores of the wall-flow filter during coating. However, this should be avoided as much as possible. Preferably, at least 80 wt% of the third coating is on the first plurality of inner surfaces, more preferably at least 90 wt%, still more preferably at least 95 wt%. Preferably, the wall-flow monolith has a channel wall thickness and the third coating penetrates to less than 10%, more preferably less than 5% of the channel wall thickness at any given point.

Preferably, the third coating extends from the first face for at least 60% of a length of the first plurality of channels, more preferably at least 70 wt%, and most preferably at least 90 wt%.

Preferably the third coating comprises from 0.05 to 0.25 g/in³ of the organic pore former based on the total volume of the wall-flow filter substrate, more preferably from 0.05 to 0.2 g/in³, still more preferably from 0.1 to 0.15 g/in³. It is to be understood that the total volume of the wall-flow filter substrate includes the entire filter cross-section, i.e. including the channels and not just the walls.

Preferably, the zeolite and the organic pore former are present in the third coating in a weight ratio of from 0.2:1 to 5:1, more preferably from 0.4:1 to 2.1, still more preferably from 0.8:1 to 1.2:1.

The fifth, sixth and seventh steps may be performed in any order. The fifth and sixth steps are preferably performed before the seventh step. Preferably the fifth, sixth and seventh steps are performed in sequence.

The eighth step of the method comprises calcining the first, second and third coatings to form the catalytic GPF. In embodiments in which the first and second coatings are formed before the third coating, the first and second coatings may be calcined (preferably in a single step) before the third coating is formed. In embodiments in which the first, second and third coatings are formed in sequence, the first coating may be calcined before the second coating, and the second coating may be calcined before the third coating. In other embodiments, the first, second and third coatings are calcined in a single step (i.e. after all three coatings have bene formed). Calcining fixes the coatings to the substrate and causes the organic pore former to burn off, thereby introducing pores into the second coating. The polyacrylate is also burnt off, typically decomposing to form gaseous ammonia. Calcining is well-known in the art and may be carried out under usual conditions, e.g. in air or an inert atmosphere, typically air. Calcining may be carried out, for instance, a temperature of from 400 to 600 °C (e.g. about 500 °C) for from 5 to 60 minutes.

In some embodiments, the or each calcining step may be preceded by a drying step at a lower temperature, such as from 100 to 200 °C. Preferably, the method comprises, in succession: coating the wall-flow filter substrate with the first washcoat slurry to form the first coating as described above; coating the substrate with the second washcoat slurry to form the second coating as described above; drying and calcining the first and second coatings; coating the substrate with the third washcoat slurry to form the third coating as described above; and drying and calcining the third coating to form the catalytic GPF.

After calcination, at least a portion of the PGM in each coating (where present) is typically supported on the respective inorganic oxide support and/or OSC material. The term "supported on" as used herein may encompass that the component, typically in the form of nanoparticles, is directly in contact, and physical and/or chemically bound to the surface of the supporting material. The term "surface of the supporting material" may encompass the surface of the pores within a porous support material, such as an inorganic oxide support and/or OSC material, for example.

Preferably the combined loading of the first and second coatings after calcination is from 0.5 to 2 g/in³, more preferably from 0.5 to 1.5 g/in³. The term "loading" as used herein has the conventional meaning in the art. That is, the loading of a coating or substance is defined as the weight of the coating or substance after calcination relative to the total volume of the wall-flow filter substrate. It is to be understood that the total volume of the wall-flow filter substrate includes the entire filter cross-section, i.e. including the channels and not just the walls.

Preferably, the loading of the third coating after calcination is from 0.02 to 1 g/in³, more preferably from 0.05 to 0.5 g/in³, still more preferably from 0.6 to 0.2 g/in³.

The total platinum group metal loading (i.e. the sum of the loadings of the first and platinum group metals and, where present, the third platinum group metal) is preferably from 1 to 50 g/ft³, more preferably from 2 to 40 g/ft³, and most preferably from 5 to 30 g/ft³.

In some embodiments, the catalytic GPF comprises one or more further coatings, such as fourth, fifth, etc. coatings. In other embodiments, the catalytic GPF consists of the wall-flow filter substrate and the first, second and third coatings. Such a configuration may assist in keeping the backpressure low.

In a second aspect, the present invention provides a catalytic GPF obtained or obtainable by the method of the above aspect. As will be appreciated by the skilled reader, the advantages and preferable features of the above aspects apply equally to this aspect, unless specified otherwise.

In a third aspect, the present invention provides an emission treatment system for the treatment of exhaust gas from a gasoline engine, wherein the emission treatment system comprises the catalytic GPF of the above aspects. As will be appreciated by the skilled reader, the advantages and preferable features of the above aspects apply equally to this aspect, unless specified otherwise. The first face of the catalytic GPF (as described above in relation to the first aspect) may be upstream of the second face (i.e. closer to the engine). Preferably, the gasoline engine operates under stoichiometric conditions.

In some embodiments, the emission treatment system may comprise additional components such as a three-way catalyst (TWC) containing a TWC composition applied to a honeycomb flow-through substrate and disposed either upstream or downstream of the catalytic GPF, preferably upstream.

In a fourth aspect, the present invention provides a method of treating an exhaust gas from a gasoline engine, the method comprising:
providing the catalytic GPF of the above aspects; and
contacting the catalytic GPF with an exhaust gas from a gasoline engine.

Typically, contacting the catalytic GPF with an exhaust gas may comprise flowing the exhaust gas through the catalytic GPF. The first face of the catalytic GPF (as described above in relation to the first aspect) may be upstream of the second face. Preferably, the gasoline engine operates under stoichiometric conditions.

The present invention will now be described in relation to the following non-limiting Figure:
The present invention will now be described in relation to the following non-limiting Examples.

### Example 1 - preparation

### WASHCOAT SLURRY A-1

A washcoat slurry A-1 containing 97% Pd nitrate, 3% Rh nitrate, a cerium-zirconium mixed oxide (mean particle size 7 µm), a boehmite alumina, ammonium polyacrylate, barium hydroxide (base metal oxide), and water was prepared. The slurry had a solid content of 21% and a viscosity of <150 cP, as measured at 20 °C on Brookfield TM RV DVII+ Extra Pro viscometer using a SC4-27 spindle at 50 rpm spindle speed.

### WASHCOAT SLURRY B-1

A washcoat slurry B-1 containing 3% Pd nitrate, 97% Rh nitrate, a cerium-zirconium mixed oxide (mean particle size 7 µm), a boehmite alumina, ammonium polyacrylate and water was prepared. The slurry had a solid content of 26% and a viscosity of <150 cP, as measured at 20 °C on Brookfield TM RV DVII+ Extra Pro viscometer using a SC4-27 spindle at 50 rpm spindle speed.

### GPF-A (In-wall base coating)

Washcoat slurry A-1 and B-1 prepared as stated above, the former was coated on the outlet face and the latter on the inlet face of a cordierite wall-flow honeycomb filter substrate (300 cells per square inch; mean pore size 17 µm; porosity 66%) using a coating procedure described in GB2524662. A pre-determined amount of the slurry B-1 was deposited at an upper end of the filter substrate using a slurry dosing head. The dosing head had a plurality of apertures arranged to dispense the slurry onto the lower end face of the filter substrate. The channels having open ends at the upper end of the filter substrate were coated with the pre-determined amount of slurry A-1 by applying a vacuum to a lower end of the filter substrate to draw the slurry along the channels. The coating length on the inlet channels is about 75% of the substrate length. The coating length on the outlet channels is about 65% of the substrate length. The coated substrate was dried at 110°C and calcined at 500°C to produce the GPF. The GPF thus produced has a washcoat loading of 1.23g/in³, Pd loading of 16.6 g/ft³, and Rh loading of 8.48 g/ft³.

### WASHCOAT SLURRY C-1

A washcoat slurry C-1 containing a high fines alumina (mean particle size 10µm), an organic pore former (Arbocel UFC 100), citric acid and water was prepared. The slurry had a solid content of 12% and a viscosity of ca.1000 cP, as measured at 20 °C on Brookfield TM RV DVII+ Extra Pro viscometer using a SC4-27 spindle at 50 rpm spindle speed.

### WASHCOAT SLURRY D-1

A washcoat slurry D-1 containing a zeolite (Y-type, SAR = 100), alumina-based binder (boehmite), an organic pore former (Arbocel UFC100) and water was prepared. The slurry had a solid content of 14% and a viscosity of ca.1000 cP, as measured at 20 °C on Brookfield TM RV DVII+ Extra Pro viscometer using a SC4-27 spindle at 50 rpm spindle speed.

### WASHCOAT SLURRY E-1

A washcoat slurry E-1 containing, a zeolite (Y-type, SAR = 100), alumina-based binder (boehmite), an organic pore former (Arbocel UFC100), and water was prepared. The slurry had a solid content of 10% and a viscosity of ca.1000 cP, as measured at 20 °C on Brookfield TM RV DVII+ Extra Pro viscometer using a SC4-27 spindle at 50 rpm spindle speed.

### GPF-B (In-wall and 0.3g/in³ WCL (30wt% pore former) Alumina Porous)

**In this example, the inlet porous (on-wall) coating is inert but could potentially be activated using PGM.*

GPF-B was prepared by following the same procedure as for preparing GPF-A, with the addition of a third dose post-calcination of the first two doses with a pre-determined amount of the slurry C-1, which was deposited at an upper end of the filter substrate using a slurry dosing head by applying a vacuum to the upper end of the filter substrate to draw the slurry along the channels. The coating length on the inlet channels is about 90% of the substrate length. The coated substrate was dried at 110°C, and calcined at 500°C to produce the GPF. The GPF thus produced has a washcoat loading of 1.53 g/in³, Pd loading of 16.6 g/ft³, and Rh loading of 8.48 g/ft³.

### GPF-C (In-wall and 0. 3g/in³ WCL (45wt% pore former) zeolite Porous)

**In this example, the inlet porous (on-wall) coating is inert but could potentially be activated using PGM.*

GPF-C was prepared by following the same procedure as for preparing GPF-A, with the addition of a third dose post-calcination of the first two doses with a pre-determined amount of the slurry D-1 was deposited at an upper end of the filter substrate using a slurry dosing head by applying a vacuum to the upper end of the filter substrate to draw the slurry along the channels. The coating length on the inlet channels is about 90% of the substrate length. The coated substrate was dried at 110°C, and calcined at 500°C to produce the GPF. The GPF thus produced has a washcoat loading of 1.53 g/in³, Pd loading of 16.6 g/ft³, and Rh loading of 8.48 g/ft³.

### GPF-D (In-wall and 0.1g/in³ WCL (100wt% pore former) zeolite Porous)

**In this example, the inlet porous (on-wall) coating is inert but could potentially be activated using PGM.*

GPF-D was prepared by following the same procedure as for preparing GPF-A, with the addition of a third dose post-calcination of the first two doses with a pre-determined amount of the slurry E-1, which was deposited at an upper end of the filter substrate using a slurry dosing head by applying a vacuum to the upper end of the filter substrate to draw the slurry along the channels. The coating length on the inlet channels is about 90% of the substrate length. The coated substrate was dried at 110°C, and calcined at 500°C to produce the GPF. The GPF thus produced has a washcoat loading of 1.33 g/in³, Pd loading of 16.6 g/ft³, and Rh loading of 8.48 g/ft³.

**TABLE 1.**

| | |
|---|---|
| GPF-A | In-wall base coating |
| GPF-B | In-wall and 0.3g/in³ WCL (30wt% pore former) alumina Porous |
| GPF-C | In-wall and 0.3g/in³ WCL (45wt% pore former) zeolite Porous |
| GPF-D | In-wall and 0.1g/in³ WCL (~100wt% pore former) zeolite Porous |

The washcoat loadings (WCL) are given based on the total volume of the substrate. The pore former weight percentages are based on the mass of the pore former present in the washcoat relative to the mass of the dry coating after calcination.

### Backpressure

The cold flow backpressure (CFBP) was measured by placing the GPF in a precision foam tooling and precision foam tooling adapter onto an SF-1020PB flowbench which will measure the CFBP at 420 m³/h using intake air flow direction. The results are shown in the following table:

**TABLE 2.**

| **Sample** | **Backpressure (mBar) at 420 m³/h** |
|---|---|
| Bare | 21.1 |
| GPF-A | 25.8 |
| GPF-B | 38.3 |

Conclusion: GPF-B observed an increased in backpressure response due to the porous on-wall slip coat added on in the inlet compared to GPF-A which only has the in-wall base layer coating.

**TABLE 3.**

| **Sample (Different substrate size)** | **Backpressure (mBar) at 600 m³/h** |
|---|---|
| Bare | 50.0 |
| GPF-B | 84.9 |
| GPF-C | 138.8 |
| GPF-D | 80.8 |

GPF-B has a lower CFBP than GPF-C and GPF-D as it has an alumina based porous coating, whereas the latter have zeolite based porous washcoats.

### Diesel Particulate Generator (DPG)

### Fresh PN

The GPF samples were evaluated on a diesel particulate generator where the filtration efficiencies were reported as single figure using difference in upstream and downstream PN measured across all three bursts of soot.

**TABLE 4.**

| **Sample** | **Fresh Filtration Efficiency (%)** |
|---|---|
| GPF-B | 79.3 |
| GPF-C | 96.6 |
| GPF-D | 86.6 |

Conclusion: GPF-C has a superior filtration efficiency than GPF-B. GPF-C had the highest CFBP which aided in boosting its FE, whereas GPF-D which is based on the same basic washcoat components as GPF-C but with lower overall WCL and higher pore former loading, has 10% lower FE.

### Engine Evaluation

### Fresh PN

The GPF samples were evaluated fresh on a 1.6L turbo/direct-injection vehicle in the underfloor (UF) position, with a coated TWC brick in the close-coupled (CC-1) upstream position. Emission (MEXA) sensors were place before after the TWC CC-1 brick at the mid-bed (MB) position and post the GPF UF at the tailpipe (TP) position, the PN analyser was placed at the TP.

**TABLE 5.**

| **Sample** | **Filtration efficiency (%)** |
|---|---|
| GPF-A | 79.2 |
| GPF-B | 93.0 |

Conclusion: GPF-B has almost a 20% benefit in filtration efficiency compared to GPF-A due to the on-wall porous slip coat.

The GPF samples were evaluated fresh on a JLR NS AJ20 P4 evo engine in the underfloor (UF) position, with a coated TWC brick in the close-coupled (CC-1) upstream position. Emission (MEXA) sensors were place before after the TWC CC-1 brick at the mid-bed (MB) position and post the GPF UF at the tailpipe (TP) position, the PN analyser was placed at the TP.

**TABLE 6.**

| **Sample** | **Fresh PN (%)** |
|---|---|
| GPF-B | 93.07 |
| GPF-C | 99.54 |

Conclusion: all concepts observed >90% FE on fresh engine testing, GPF-D reaching 99% due to its high CFBP. GPF-C had the lowest FE due to the alumina based porous washcoat.

### Fresh Activity - Conversion

**TABLE 7.**

| **Sample** | **THC conversion %** | **CO conversion %** | **NO conversion %** |
|---|---|---|---|
| GPF-A | 34.15 | 51.28 | 66.68 |
| GPF-B | 34.59 | 51.64 | 69.15 |
| GPF-C | 39.13 | 48.96 | 68.75 |

Conclusion: All examples generally have comparable fresh three-way filter performance on engine but GPF-C has improved THC conversion.

### Engine aged (100 hrs) activity - light-off temperature

The GPF samples were aged in the UF positions with identical TWC in the CC-1 position on an engine under the Toyota protocol which consists of the UF catalyst inlet temperature of 925 °C and for 100 hours.

The engine aged GPFs were evaluated on an engine in the underfloor (UF) position, where the inlet and outlet temperature of the GPFs were recorded as where the emissions.

**TABLE 8.**

| | T50 NOx (°C) | T50 CO (°C) | T50 THC (°C) |
|---|---|---|---|
| GPF-A | 321 | 325 | 335 |
| GPF-B | 332 | 335 | 342 |

Conclusion: GPF-A has slightly superior T50 light off temperature compared to GPF-B due to maximum access of the active in-wall coating which is not partially covered by an inert porous layer on the inlet which would have impeded the tailpipe emissions to interact with the Rh rich in-wall inlet coating, as it did for GPF-B.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a first polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) a second polyacrylate, (b) a second platinum group metal selected from the group consisting of Pt, Pd, Rh and mixtures thereof, (c) a second oxygen storage capacity (OSC) material, and (d) a second inorganic oxide support;
(iv) providing a third washcoat slurry comprising: (a) an organic pore former, (b) optionally a third platinum group metal selected from the group consisting of Pt, Pd, Rh and mixtures thereof, (c) optionally a third oxygen storage capacity (OSC) material, and (d) optionally a third inorganic oxide support;
(v) coating the wall-flow filter substrate with the first washcoat slurry from the first face to form a first coating disposed within the porous walls;
(vi) coating the wall-flow filter substrate with the second washcoat slurry from the second face to form a second coating disposed within the porous walls;
(vii) coating the wall-flow filter substrate with the third washcoat slurry from the first face to form a third coating disposed on the first plurality of inner surfaces; and
(viii) calcining the first, second and third coatings to form the catalytic GPF.

2. A method according to claim 1, wherein the organic pore former is selected from the group consisting of cellulose, polyethylene, starch, graphite, polypropylene, polyaramide, polytetrafluoroethylene, polystyrene, polymethyl methacrylate, and mixtures thereof.

3. A method according to claim 1 or claim 2, wherein the third washcoat slurry comprises from 20 to 60 wt% of the organic pore former based on the total weight of the third coating after calcination.

4. A method according to any of the preceding claims, wherein the third washcoat slurry further comprises a zeolite, preferably wherein the zeolite has a framework type selected from the group consisting of AEI, BEA, CHA, FER, FAU and MFA.

5. A method according to claim 4, wherein the zeolite has the FAU framework type.

6. A method according to any of the preceding claims, wherein the first polyacrylate and/or the second polyacrylate is a homopolymer of acrylic acid or acrylate.

7. A method according to any of claims 1 to 5, wherein the first polyacrylate and/or the second polyacrylate is a copolymer of acrylic acid or acrylate and another monomer unit.

8. A method according to any of the preceding claims, wherein the first polyacrylate and/or the second polyacrylate has a weight average molecular weight (Mw) of from 800 to 4,000 g/mol.

9. A method according to any of the preceding claims, wherein the first coating extends from the first face for from 55 to 95% of a length of the first plurality of channels.

10. A method according to any of the preceding claims, wherein the second coating extends from the second face for from 55 to 95% of a length of the second plurality of channels.

11. A method according to any of the preceding claims, wherein the third coating extends from the first face for at least 60% of a length of the first plurality of channels.

12. A method according to any of the preceding claims, wherein the catalytic GPF consists of the wall-flow substrate and the first, second and third coatings.

13. A catalytic GPF for the treatment of exhaust gas from a gasoline engine, wherein the catalytic GPF is obtained or obtainable by the method of any of the preceding claims.

14. An emission treatment system for the treatment of exhaust gas from a gasoline engine, wherein the emission treatment system comprises the catalytic GPF of claim 13.

15. A method for treating an exhaust gas from a gasoline engine, the method comprising:
providing the catalytic GPF of claim 13; and
contacting the catalytic GPF with an exhaust gas from a gasoline engine.
